Europäisches Patentamt

(19) European Patent Office  (11) Numéro de publication: **0 333 532**

Office européen des brevets  **B1**

(12) **FASCICULE DE BREVET EUROPEEN**

(45) Date de publication du fascicule du brevet: **06.02.91**  (51) Int. Cl.⁵: **F 16 L 11/08**

(21) Numéro de dépôt: **89400473.8**

(22) Date de dépôt: **21.02.89**

(54) **Tube en matériaux composites peu sensible à la variation d'allongement sous l'effet de la pression interne.**

(30) Priorité: **29.02.88 FR 8802500**

(43) Date de publication de la demande:
**20.09.89 Bulletin 89/38**

(45) Mention de la délivrance du brevet:
**06.02.91 Bulletin 91/06**

(84) Etats contractants désignés:
**BE DE ES GB GR IT NL**

(56) Documents cités:
**DE-A-2 217 311**
**DE-A-2 625 900**
**DE-A-2 835 344**
**DE-A-3 408 251**
**DE-B-2 135 377**
**DE-B-2 626 217**
**FR-A-2 229 912**
**GB-A-2 059 538**

(73) Titulaire: **INSTITUT FRANCAIS DU PETROLE**
**4, Avenue de Bois-Préau**
**F-92502 Rueil-Malmaison (FR)**
(73) Titulaire: **AEROSPATIALE**
**37, Boulevard de Montmorency**
**F-75016 Paris (FR)**

(72) Inventeur: **Sparks, Charles**
**19bis, Rue Pasteur**
**F-78110 Le Vesinet (FR)**
Inventeur: **Odru, Pierre**
**7, Rue Pablo Picasso**
**F-94120 Fontenay sous Bois (FR)**
Inventeur: **Auberon, Marcel**
**Résidence Orion 14 Allée du Passen**
**F-33160 Le Maillan (FR)**
Inventeur: **Fuchs, Jean-François**
**211, La Landes Sainte Hélène**
**F-33480 Castelnau Medoc (FR)**

Courier Press, Leamington Spa, England.

**Description**

La présente invention concerne une nouvelle structure de tube en matériaux composites ne présentant pas de variation sensible de longueur sous l'effet de la pression interne.

Par matériau composite, il faut entendre un matériau comprenant des fibres parallèles entre elles, telles des fibres de verre, fibres de carbone, fibres aramides, enrobées dans une matrice, telles une matrice thermoplastique ou thermodurcissable, par exemple une résine époxy.

Un tube en materiaux composites est par exemple connu du document GB—A—2 059 538 (& FR—A—2 464 423).

L'invention s'applique notamment à la réalisation de tubes pour le transfert ou la rétention de fluides sous pression, tels que de l'eau ou des hydrocarbures.

Plus particulièrement, les tubes selon l'invention sont destinés a être utilisés dans les opérations de recherche et d'exploitation pétrolière en mer, par exemple comme colonnes principales ou auxiliaires montantes et descendantes reliant le fond de la mer à un support de surface, tel une plate-forme de forage ou d'exploitation, ou une bouée de subsurface. De telles colonnes sont couramment désignées par leur appellation anglaise de "riser" ou "tubing".

Les colonnes montantes ("risers") de production de plate-formes fixes ou à lignes tendues réalisent en service normal la protection des tubes de production (appelés aussi "tubings") sans être soumises à la pression régnant dans le gisement. Ces colonnes sont cependant conçues pour admettre accidentellement des pressions internes, par exemple en cas de fuite ou de rupture du tube de production.

Ces colonnes, compte-tenu de leur grande longueur, subissent des variations d'allongement importantes, dues notamment à la traction induite par l'effet de fond résultant d'éventuelles pressions qui règneront à l'intérieur de ces colonnes, à leur poids ou à leurs variations de températures. Pour compenser ces variations, les colonnes sont, soit soumises à une importante précontrainte en traction, soit maintenues tendues à l'aide de systèmes de tensionnement complexes assurant une traction pouvant être constante ou égale à une valeur minimale en fonction des conditions opératoires.

Le tube selon l'invention, qui présente une souplesse importante à toute sollicitation de traction en l'absence de pression interne, est particulièrement adapté à ce type de colonnes montantes, car il permet la suppression de tout ou d'une partie du système de maintien en traction de la colonne en fonction de l'allongement.

La traction en tête, en l'absence de pression interne, correspond à celle nécessaire pour reprendre le poids propre du tube multiplié par un certain facteur supérieur à 1 (1, 7 par exemple), afin de maintenir le profil de la colonne dans des limites acceptables, malgré des sollicitations externes résultant, par exemple, de l'effet de courant pour une ligne immergée.

En cas de mise en pression accidentielle d'un tube selon l'art antérieur, la pression va agir sur le sommet du tube et lui communiquer un effort important, ce qui va se traduire par un allongement du tube. Cet allongement nécessite d'être repris par un système de tensionnement afin d'éviter un effondrement dans la partie basse de la colonne.

Lors d'une mise en pression interne, le tube, objet de la présente invention, présente un allongement longitudinal nul ou très faible, supprimant par contrecoup la nécessité du système de tensionnement.

Le tube selon la présente invention peut également être utilisé comme tube de production ou colonne de production ("riser") aboutissant à une bouée de subsurface: dans ces cas précis, les tubes sont fixés à leurs extrémités inférieures et supérieures sans système de tensionnement permanent. La mise en pression et température s'accompagne d'une tendance au flambage des tubes selon l'art antérieur qui vont réagir en prenant appui sur des systèmes environnants (guides de flambage spécialement prévus) et en créant éventuellement d'importantes contraintes de flexion-compression aux extrémités inférieures. La mise en oeuvre de tubes selon l'invention permet de diminuer ou de supprimer les systèmes de guidage' de simplifier le prétensionnement initial, et de diminuer les contraintes de flexion-compression en pied.

Le tube selon la présente invention peut également être utilisé comme tube de production, ou d'injection d'eau ou de gaz ("tubing"), soit à l'intérieur de l'une des colonnes montantes précédemment décrites ("risers"), soit directement à l'intérieur du puits, et ce à terre comme en mer. La mise en pression et/ou température s'accompagne d'une tendance au flambage des tubes selon l'art antérieur qui réagissent en prenant appui sur les parois externes ("casings" dans le puits ou "risers" dans les colonnes montantes) en créant éventuellement d'importantes contraintes de flexion-compression aux extrémités inférieures.

L'invention permet de diminuer ou de supprimer le tensionnement initial, ou de supprimer les système de joints coulissants en pied en les remplaçant par des encastrements, ou de diminuer les contraintes de flexion en pied.

Le tube selon la présente invention peut aussi être utilisé pour les lignes périphériques des colonnes de forage en mer, ces colonnes servant à protéger les tiges de forage. Ces lignes périphériques peuvent être des lignes de sécurité (lignes "Kill and Choke") ou des, ' lignes d'injection de boue ("Booster"). Les tubes selon l'art antérieur sont coulissants à leur extrémités. Lorsqu'ils sont mis en pression interne, il se développe une instabilitè latérale équivalente à un flambage qui a tendance à les faire sortir violemment de leur système de guidage: la mise en oeuvre d'un tube selon l'invention en encastrant celui-ci aux extrémités, et en faisant reprendre les efforts de traction induits par des butées d'extrémité, permet de supprimer tout système de guidage intermédiaire.

La présente invention peut également être utilisée pour former les tubes ou tubages de production de puits forés depuis la terre ferme.

De même le tube selon la présente invention peut être utilisé en tant que tube de production ("tubing") à l'intérieur d'un puits à terre comme en mer, ou à l'intérieur d'une colonne montante ("riser") en mer.

L'invention pourrait s'appliquer également aux conduites de collectes sous-marines devant être ensouillées, c'est-à-dire disposées au fond d'une tranchée, pour éviter les risques de détérioration dus à la navigation.

En effet les conduites selon l'art antérieur, une fois ensouillées, ont tendance à s'allonger lorsqu'elles sont mises en pression et de ce fait elles risquent de se déformer et de resurgir verticalement hors de la tranchée, ce qui annule évidemment l'effet de l'ensouillage.

Le tube selon l'invention réduit notablement ces risques.

Les exemples d'application donnés précédemment ne sont nullement limitatifs.

Les tubes composites comportent généralement une superposition de couches dont chacune comporte des fibres disposées sous des angles égaux ou symétriques par rapport à l'axe du tube et noyées dans une matrice. Cette matrice adhère aux fibres.

Certaines de ces couches peuvent être adaptées à résister plus particulièrement à la pression règnant à l'intérieur du tube ou pression résistant à la pression comportent alors des groupes de fibres enroulées sous un angle élevé par rapport à l'axe du tube, alors que les couches résistant à la traction comportent des fibres enroulées sous un angle faible par rapport à l'axe du tube.

Les tubes composites selon l'enseignement de l'art antérieur sont construits pour résister aux efforts de traction et de pression interne et ne présentent par un allongement sensiblement nul sous l'effet de la pression interne.

En effet, d'une manière générale, des tubes traditionnels résistant à la pression interne en fibres de carbone, fibres aramides ou fibres de verre s'allongent, sous l'effet de la pression interne, respectivement d'environ 0,4%, 0,6%, 0,8% à leur limite de service en pression.

Le tube composite seon la présente invention présente un allongement beaucoup plus faible, voire nul ou négatif.

Le tube en matériau composite selon la présente invention permet, compte tenu de ses performances, d'envisager de nouvelles applications pour les tubes en matériau composite, de plus il réduit les inconvénients cités, ci-avant.

Dans la description qui suit de la présente invention, sauf spécification contraire, on entend par groupe de fibres un ensemble de fibres parallèles entre elles, de même compositions, noyées dans une matrice, et par couche un ou plusieurs groupes de fibres enroulés suivant un angle sensiblement constant en valeur absolue par rapport à l'axe d'enroulement et comprenant une proportion égale de fibres enroulées dans un sens sous l'angle indiqué précédemment, et de fibres enroulées dans le sens opposé sous ce même angle.

Ainsi pour une même couche il y a autant de fibres enroulées sous l'angle têta par rapport à l'axe d'enroulement que de fibres enroulées sous l'angle -têta par rapport à l'axe d'enroulement.

Enfin la cohésion d'une ou de plusieurs couches est assurée par la matrice qui adhère aux fibres et qui forme sensiblement un milieu continu.

Ainsi la présente invention concerne un tube en matériaux composites, peu sensible à la variation d'allongement sous l'effet de la pression interne, comportant un nombre n de couches stables de fibres de renfort, les fibres de chaque couche (i) étant placées sous un même angle d'enroulement en valeur absolue noté têta par rapport à l'axe du tube avec une proportion égale de fibres enroulées sous ledit angle dans un sens (| têta |) que de fibres enroulées dans le sens opposé (−| têta |). Les fibres de chaque couche sont noyées dans une matrice qui adhère à ces fibres, les fibres d'une même couche et la matrice associée ayant un volume noté Y. Les fibres parallèles d'une même couche et la matrice associée ayant globalement un module d'élasticité dans la direction propre des fibres noté E selon la présente invention les n couches de fibres respectent ensemble la relation suivante:

$0,35 \leq A \leq 0,60$ où A est égal à l'expression suivante:

$$
A = \frac{\sum_{i=1}^{i=n} \left[ E_i \ Y_i \ (\sin^2 |\text{têta}_i|).(\cos^2 |\text{têta}_i|) \right]}{\sum_{i=1}^{i=n} \left[ E_i \ Y_i \ \sin^4 |\text{têta}_i| \right]}
$$

i étant l'indice de sommation sur les différentes couches de fibres.

Afin de réduire l'influence d'une erreur sur l'angle de placement des fibres d'un groupe, c'est-à-dire d'accroître la tolérance acceptable sur ce paramètre de fabrication, on préférera une structure telle que:

$0,40 \leq A \leq 0,60$

ou, mieux encore, une structure telle que:

$0,43 \leq A \leq 0,52$

# EP 0 333 532 B1

Les fibres de renfort pourront être en verre, en aramides, en carbone ou tous autres matériaux pris seuls ou en combinaison. On pourra associer les groupes de fibres de renfort par paire de groupes de fibres identiques, l'un des groupes faisant un angle +têta avec l'axe du tube, l'autre groupe de la paire faisant un angle moins têta.

Suivant le tube selon l'invention, les fibres de renfort d'au moins une couche pourront être des fibres comportant du verre, du carbone ou de l'aramide.

Le tube selon l'invention pourra comporter au moins deux couches, l'une desdites couches pourra comporter des fibres enroulées sous un angle faible par rapport à l'axe du tube et l'autre pourra comporter des fibres enroulées sous un angle élevé par rapport à l'axe du tube. Le module d'élasticité globale, dans la direction propre des fibres, de la couche à angle d'enroulement faible pourra être supérieur au module d'élasticité globale, dans la direction propre des fibres, de la couche à angle d'enroulement élevé.

Le tube selon l'invention pourra comporter au moins deux couches, l'une de ces couches pourra comporter des fibres enroulées sous un angle compris entre 55° et 90° autre couche pourra comporter des fibres enroulées sous un angle dont la valeur absolue est comprise entre 10° et 45°. Lorsque le tube ne comporte que deux couches la proportion globale de l'une des couches en volume par rapport à l'ensemble global des deux couches pourra être comprise entre 35 et 65%.

Le tube selon l'invention pourra comporter une couche à angle d'enroulement sensiblement égal à 70°, par rapport à l'axe du tube, le module d'élasticité globale dans la direction propre de ces fibres étant voisin de la plage 50 000—56 000 MPa, ce tube pourra également comporter une couche à angle d'enroulement sensiblement égal à 26° par rapport à l'axe du tube, le module d'élasticité globale dans la direction propre de cette couche orientées à 26° étant voisin de 140 000 MPa, et les proportions de la couche à 70° et de la couche à 26° pourront être respectivement et sensiblement égales à 55% et 45%, en volume.

Le tube composite selon l'invention pourra comporter une couche à angle d'enroulement sensiblement égal à 70°, par rapport à l'axe du tube, le module d'élasticité globale dans la direction propre de ces fibres étant voisin de la plage 50 000—56 000 MPa, ce tube pourra également comporter une couche à angle d'enroulement sensiblement égal à 30° par rapport à l'axe du tube, le module d'élasticité globale dans la direction propre de cette couche orientée à 30° étant voisin de 100 000 MPa, et les proportions de la couche à 70° et de la couche à 30° pourront être respectivement sensiblement égales à 50% et 50% en volume.

Le tube composite selon l'invention pourra comporter une couche ayant des fibres de renfort enroulées sous un angle sensiblement égal en valeur absolue à 38°, par rapport à l'axe du tube, et au moins une couche ayant des fibres de renfort enroulées sous un angle sensiblement égal en valeur absolue à 62°, par rapport à l'axe du tube, et les proportions globales en volume de la couche à 38° et de la couche à 62° par rapport à l'ensemble de ces deux couches sont respectivement sensiblement égales à 45% et 55%.

Ainsi que cela a été dit le tube selon l'invention peut être utilisé dans la constitution d'une colonne montante d'une plate forme de forage ou de production. De même qu'il peut être utilisé tant que le tube de production ("tubing") à l'intérieur d'un puits à terre comme en mer, ou à l'intérieur d'une colonne montante ("riser") en mer.

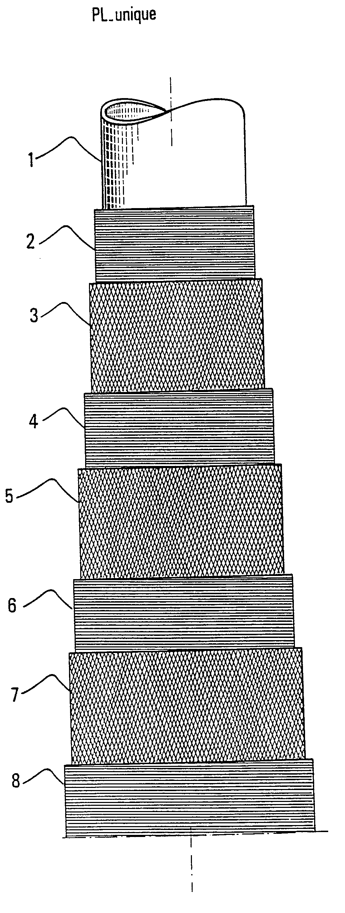

La figure annexée montre un exemple de tube composite auquel s'applique l'invention.

Ce tube comporte une gaine interne 1 sur laquelle s'empile une succession de couches composites 2, 3, 4, 5, 6, 7, 8 dont chacune comporte des groupes de fibres de renforts. Ces groupes sont, par exemple, disposés en alternant les groupes 2, 4, 6, 8 de renfort résistant aux efforts dus à la pression et les groupes 3, 5, 7 de renfort résistant aux efforts de traction.

Ainsi, on peut avoir un tube comportant deux séries de couches composites. La première série de ces couches composites 3, 5, 7 est constituée de fibres de carbone enroulées symétriquement par rapport à l'axe du tube sous des angles de + 26°, le matériau composite ayant selon l'axe des fibres un module d'élasticité ou module d'Young E1 = 140 000 MPa.

La deuxième série de ces couches composites 2, 4, 6, 8 est constituée de fibres de verre enroulées symétriquement par rapport à l'axe du tube sous des angles de +70°, le matériau composite ayant selon l'axe des fibres un module d'élasticité E2 = 56 000 MPa. Le diamètre intérieur du tube est de 23 centimètres.

Les épaisseurs cumulées pour les séries de couches sont respectivement de 0,75 cm pour la première série et 0,91 cm pour la deuxième série.

Les proportions en volume de résine dans chacune des séries de couches composites sont respectivement de 40% pour le premier et 33% pour la deuxième. La première série de couches comporte trois couches intercalées entre quatre couches de la deuxième série.

Les proportions en volume des matériaux composites verre et du composite carbone sont respectivement de 55% et 45%.

L'allongement relatif à ce tube est de $3.10^{-4}$ lorsque la pression auquel il est soumis est de 350 bars.

On pourra obtenir un tube à très faible allongement en remplaçant dans l'exemple précédent les fibres de verre par des fibres aramides à faible module (KEVLAR 29). Les proportions des composites et les angles d'enroulement restent inchangées.

Un autre exemple pour obtenir un tube à très faible allongement consiste à utiliser un composite verre dont les fibres sont enroulées à 70° par rapport à l'axe du tube et un matériau composite aramide à haut module d'élasticité (Kevlar 49) dont les fibres sont enroulées à 30° par rapport à l'axe du tube. Les

4

proportions de matériau composite verre et de matériau composite Kevlar sont respectivement de 50% et 50%.

On pourra également obtenir un tube possédant un allongement très faible en substituant dans l'exemple précédant aux fibres de verre des fibres aramides bas module (ex. Kevlar 29).

Les proportions des matériaux composites et les angles d'enroulement restent inchangées.

Le module d'Young longitudinal du composite KEVLAR 49 est voisin de 100 000 MPa et celui du matériau composite KEVLAR 29 voisin de 50 000 MPa. Les appellations KEVLAR 49 et KEVLAR 29 sont des marques déposées par la société Du Pont de Nemours.

Le tableau donné ci-dessous résume les exemples donnés précédemment.

| NATURES DES FIBRES | ANGLE D'ENROULEMENT EN VALEUR ABSOLUE | PROPORTION EN VOLUME |
|---|---|---|
| Verre <br> Carbone | $70°$ <br> $26°$ | 55 % <br> 45 % |
| Verre <br> Aramide (à haut module d'élasticité) (Kevlar 49) | $70°$ <br> $30°$ | 50 % <br> 50 % |
| Aramide (à bas module d'élasticité) (Kevlar 29) <br> Carbone | $70°$ <br><br> $26°$ | 55 % <br><br> 45 % |
| Aramide (à bas module d'élasticité) (Kevlar 29) <br> Aramide (à haut module d'élasticité) (Kevlar 49) | $70°$ <br><br> $30°$ | 50 % <br><br> 50 % |

De la même manière que l'on réalise des tubes possédant un allongement très faible avec deux matériaux composites, on réalise de tels tubes avec un seul matériau composite. Ceci est obtenu, par exemple, en enroulant des fibres sous des angles de +38° et +62°, par rapport à l'axe du tube. Les proportions en volume des fibres à 38° et 62° et de leur matrice associée sont respectivement de 45% et 55% la nature de ces fibres ne modifie pas les caractéristiques du tube.

Enfin, d'une manière plus générale, lorsque l'on utilise deux couches comportant des fibres de natures différentes on aura de préférence:

une couche comportant des fibres placées sous un angle compris entre 55° et 90°, et,

une autre couche comportant des fibres placées sous un angle compris entre 10 et 45°.

Dans le cas de deux types de fibres différentes, les couches présentant dans la direction propre des fibres le module d'Young le plus important seront déposées avec l'angle faible, et celles présentant le module d'Young dans la direction propre des fibres le plus faible seront déposées avec l'angle élevé.

Enfin il convient de noter que, de préférence, une même couche pourra comporter un ou plusieurs groupes de fibres bobinées de manière à ce que ces groupes soient adjacents côte à côte.

## Revendications

1. Tube en matériaux composites, peu sensible à la variation d'allongement sous l'effet de la pression interne, comportant un nombre n de couches stables de fibres de renfort, les fibres de chaque couche (i) étant placées sous un même angle d'enroulement en valeur absolue noté têta par rapport à l'axe du tube, avec une proportion égale de fibres enroulées sous ledit angle dans un sens ($|$ têta $|$) que de fibres enroulées dans le sens opposé ($-|$ têta $|$), les fibres de chaque couche étant noyées dans une matrice qui adhère à ces fibres, les fibres d'une même couche et la matrice associée ayant un volume noté Y, les fibres parallèles d'une même couche et la matrice associée ayant globalement un module d'élasticité dans la direction propre des fibres noté E, caractérisé en ce que les n couches de fibres respectent ensemble la relation suivante:

$0,35 \leqslant A \leqslant 0,60$ où A est égal à l'expression suivante:

5

$$A = \frac{\sum\limits_{i=1}^{i=n}\left[E_i \; Y_i \; (\sin^2 |t\hat{e}ta_i|).(\cos^2 |t\hat{e}ta_i|)\right]}{\sum\limits_{i=1}^{i=n}\left[E_i \; Y_i \; \sin^4 |t\hat{e}ta_i|\right]}$$

i étant l'indice de sommation sur les différentes couches de fibres.

2. Tube selon la revendication 1, caractérisé en ce que $0,40 \leqslant A \leqslant 0,55$.

3. Tube selon la revendication 1, caractérisé en ce que $0,43 \leqslant A \leqslant 0,52$.

4. Tube selon l'une des revendications 1 à 3, caractèrisé en ce que les fibres de renfort d'au moins une couche sont des fibres comportant du verre, du carbone ou de l'aramide.

5. Tube selon l'une des revendications 1 à 4, comportant au moins deux couches, caractérisé en ce que l'une desdites couches comporte des fibres enroulées sous un angle faible par rapport à l'axe du tube et l'autre comporte des fibres enroulées sous un angle élevé par rapport à l'axe du tube et en ce que le module d'élasticité globale' dans la direction propre des fibres, de la couche à angle d'enroulement faible est supérieur au module d'élasticité globale, dans la direction propre des fibres, de la couche à angle d'enroulement élevé.

6. Tube selon l'une des revendications 1 à 5, comportant au moins deux couches, caractérisé en ce que l'une desdites couches comporte des fibres enroulées sous un angle compris entre 55° et 90° et en ce que l'autre couche comporte des fibres enroulées sous un angle dont la valeur absolue est comprise entre 10° et 45°.

7. Tube selon la revendication 6, caractérisé en ce que ledit tube ne comporte que deux couches et en ce que la proportion globale de l'une des couches en volume par rapport à l'ensemble global des deux couches est compris entre 35 et 65%,.

8. Tube selon l'une des revendications 1 à 7, caractérisé en ce qu'il comporte une couche à angle d'enroulement sensiblement égal à 70°, par rapport à l'axe du tube, le module d'élasticité globale dans la direction propre de ces fibres étant voisin de la plage 50 000—56 000 MPa, en ce qu'il comporte une couche à angle d'enroulement sensiblement égal à 26° par rapport à l'axe du tube, le module d'élasticité globale dans la direction propre de cette couche orientées à 26° étant voisin de 140 000 MPa, et en ce que les proportions de la couche à 70° et de la couche à 26° sont respectivement sensiblement égales à 55% et 45%, en volume.

9. Tube selon l'une des revendications 1 à 7, caractérisé en ce qu'il comporte une couche à angle d'enroulement sensiblement égal à 70°, par rapport à l'axe du tube, le module d'élasticité globale dans la direction propre de ces fibres étant voisin de la plage 50 000—56 000 MPa, en ce qu'il comporte une couche à angle d'enroulement sensiblement égal à 30° par rapport à l'axe du tube, le module d'élasticité globale dans la direction propre de cette couche orientée à 30° étant voisin de 100 000 MPa, et en ce que les proportions de la couche à 70° et de la couche à 30° sont respectivement sensiblement égales à 50% et 50% en volume.

10. Tube selon l'une des revendications 1 à 4, caractérisé en ce qu'il comporte au moins une couche ayant des fibres de renfort enroulées sous un angle sensiblement égal en valeur absolue à 38°, par rapport à l'axe du tube, et au moins une couche ayant des fibres de renfort enroulées sous un angle sensiblement égal en valeur absolue à 62°, par rapport à l'axe du tube, et en ce que les proportions globales en volume de la couche à 38° et de la couche à 62° par rapport à l'ensemble de ces deux couches sont respectivement sensiblement égales à 45% et 55%.

11. Utilisation du tube selon l'une des revendications 1 à 10 dans la constitution d'une colonne montante d'une plate forme de forage ou de production.

12. Utilisation du tube selon l'une des revendicaitons 1 à 10 en tant que tube de production ("tubing") à l'intérieur d'un puits à terre comme en mer, ou à l'intérieur d'une colonne montante ("riser") en mer.

**Patentansprüche**

1. Rohr aus Verbundmaterialien mit geringer Empfindlichkeit für Dehnungswechsel aufgrund von Innendruck mit einer Anzahl von n-stabilen Schichten aus Verstärkungsfasern, wobei die Fasern jeder Schicht (i) unter einem im Absolutwert gleichen Wicklungswinkel mit der Bezeichnung Teta, bezogen auf die Achse des Rohres, angeordnet sind, mit einem gleichen Anteil von Fasern, die unter diesem Winkel in der einen Richtung (| Teta |) gewickelt sind, wie von Fasern, die in der entgegengesetzten Richtung (−| Teta |) gewickelt sind, wobei die Fasern jeder Schicht in einer Matrix, die an diesen Fasern haftet, eingebettet sind und die Fasern ein und der gleichen Schicht und die zugeordnete Matrix ein Y bezeichnetes Volumen haben, wobei die parallelen Fasern ein und der gleichen Schicht und die zugeordnete Matrix insgesamt einen Elastizitätsmodul in der Eigenrichtung der Fasern, mit E bezeichnet, haben, dadurch gekennzeichnet, daß die n-Schichten von Fasern ingsgesamt der folgenden Beziehung genügen:

$0,35 \leqslant A \leqslant 0,60$, wo A gleich dem folgenden Ausdruck ist:

$$A = \frac{\sum_{i=1}^{i=n}\left[ E_i \; Y_i \; (\sin^2 |teta_i|).(\cos^2 |teta_i|) \right]}{\sum_{i=1}^{i=n}\left[ E_i \; Y_i \; \sin^4 |teta_i| \right]}$$

und i der Summenindex über die verschiedenen Faserschichten ist.

2. Rohr nach Anspruch 1, dadurch gekennzeichnet, daß $0{,}40 \leqslant A \leqslant 0{,}55$ ist.

3. Rohr nach Anspruch 1, dadurch gekennzeichnet, daß $0{,}43 \leqslant A \leqslant 0{,}52$ ist.

4. Rohr nach einem der Ansprüche 1 bis 3, dadurch gekennzeichnet, daß die Verstärkungsfasern wenigstens einer Schicht Fasern sind, welche Glas, Kohlenstoff oder Aramid umfassen.

5. Rohr nach einem der Ansprüche 1 bis 4 mit wenigstens zwei Schichten, dadurch gekennzeichnet, daß eine dieser Schichten Fasern umfaßt, die unter einem geringen Winkel, bezogen auf die Achse des Rohres, gewickelt sind, und die andere Fasern umfaßt, die unter einem größeren Winkel, bezogen auf die Achse des Rohres, gewickelt sind und daß der Elastizitätsgesamtmodul in der Eigenrichtung der Fasern der Schicht mit dem geringen Wicklungswinkel größer als der Elastizitätsgesamtmodul in der Eigenrichtung der Fasern der Schicht mit dem größeren Wicklungswinkel ist.

6. Rohr nach einem der Ansprüche 1 bis 5, mit wenigstens zwei Schichten, dadurch gekennzeichnet, daß eine dieser Schichten Fasern umfaßt, die unter einem Winkel zwischen 55 und 90° gewickelt sind und daß die andere Schicht Fasern umfaßt, die unter einem Winkel gewickelt sind, dessen Absolutwert zwischen 10° und 45° beträgt.

7. Rohr nach Anspruch 6, dadurch gekennzeichnet, daß dieses Rohr nur zwei Schichten umfaßt und daß der Gesamtvolumenanteil einer der Schichten, bezogen auf die aus den zwei Schichten bestehende Gesamtanordnung, zwischen 35 und 65% beträgt.

8. Rohr nach einem der Ansprüche 1 bis 7, dadurch gekennzeichnet, daß es eine Schicht mit einem Wicklungswinkel von im wesentlichen gleich 70°, bezogen auf die Achse des Rohres, umfaßt, wobei der Elastizitätsgesamtmodul in der Eigenrichtung dieser Fasern benachbart dem Bereich 50 000—56 000 MPa ist und daß es eine Schicht mit einem Wicklungswinkel im wesentlichen von 26°, bezogen auf die Achse des Rohres, umfaßt, wobei der Elastitzitätsgesamtmodul in der Eigenrichtung dieser unter 26° gerichteten Schicht benachbart 140 000 MPa beträgt und daß die Anteile der 70° Schicht und der 26° Schicht jeweils im wesentlichen gleich 55 und 45 Vol.-% betragen.

9. Rohr nach einem der Ansprüche 1 bis 7, dadurch gekennzeichnet, daß es eine Schicht mit einem Wicklungswinkel im wesentlichen von 70°, bezogen auf die Achse des Rohres, umfaßt, wobei der Elastizitätsgesamtmodul in der Eigenrichtung dieser Fasern benachbart dem Bereich 50 000—56 000 MPa liegt und daß es eine Schicht mit einem Wicklungswinkel im wesentlichen von 30°, bezogen auf die Achse des Rohres, umfaßt, wobei der Elastizitätsgesamtmodul in der Eigenrichtung dieser unter 30° gerichteten Schicht benachbart 100 000 MPa beträgt und daß die Anteile der 70° Schicht und der 30° Schicht jeweils im wesentlichen 50% und 50 Vol.-% betragen.

10. Rohr nach einem der Ansprüche 1 bis 4, dadurch gekennzeichnet, daß es wenigstens eine Schicht mit Verstärkungsfasern umfaßt, die unter einem Winkel im wesentlichen gleich dem Absolutwert 38°, bezogen auf die Achse des Rohres, gewickelt sind und eine Schicht mit Verstärkungsfasern umfaßt, die unter einem Winkel im wesentlichen gleich dem Absolutwert von 62°, bezogen auf die Achse des Rohres, gewickelt sind und daß die Volumengesamtanteile der 38° Schicht und der 62° Schicht, bezogen auf die Gesamtanordnung aus diesen beiden Schichten, jeweils im wesentlichen gleich 45% und 55% betragen.

11. Verwendung des Rohres nach einem der Ansprüche 1 bis 10 zum Aufbau einer Steigkolonne oder einer Steigrohranordnung einer Bohr- oder Produktionsplattform.

12. Verwendung des Rohres nach einem der Ansprüche 1 bis 10 als Produktionsrohr ("tubing") im Inneren eines Bohrlochs zu Lande wie im Meer oder im Inneren einer Steigkolonne ("riser") im Meer.

**Claims**

1. Tube made from composite materials, basically insensitive to variations in elongation when subjected to the effects of internal pressure, comprising a number n of stable layers of reinforcing fibres, the fibres for each layer (i) being placed at the same winding angle in absolute value, reference theta, relative to the axis of the tube, with an equal proportion of fibres wound at the said angle in one direction (| theta |) and fibres wound in the opposite direction (−| theta |), the fibres for each layer being embedded in a matrix which adheres to these fibres, the fibres for a same layer and the associated matrix having a volume, reference Y, the parallel fibres for a same layer and the associated matrix having, overall, a modulus of elasticity in the natural direction of the fibres, reference E, characterised in that the n layers of fibres together respect the following relationship:

$0.35 \leqslant A \leqslant 0.60$ where A is equal to the following expression:

$$A = \frac{\sum\limits_{i=1}^{i=n}\left[ E_i\, Y_i\, (\sin^2\left|\,\text{theta}_i\,\right|).(\cos^2\left|\,\text{theta}_i\,\right|) \right]}{\sum\limits_{i=1}^{i=n}\left[ E_i\, Y_i\, \sin^4\left|\,\text{theta}_i\,\right| \right]}$$

i being the summation factor for the different layers of fibres.

2. Tube in accordance with claim 1, characterised in that $0.40 \leqslant A \leqslant 0.55$.

3. Tube in accordance with claim 1, characterised in that $0.43 \leqslant A \leqslant 0.52$.

4. Tube in accordance with one of claims 1 to 3, characterised in that the reinforcing fibres for at least one layer in the form of glass fibres, carbon fibres or aramide fibres.

5. Tube in accordance with one of claims 1 to 4, comprising at least two layers, characterised in that one of the said layers comprises fibres wound at a slight angle relative to the axis of the tube and the other layer comprises fibres wound at a greater angle relative tn the axis of the tube and in that the overall modulus of elasticity in the natural direction of he fibres for the layer wound at a slight angle exceeds the overall modulus of elasticity in the natural direction of the fibres for the layer wound at a greater angle.

6. Tube in accordance with one of claims 1 to 5, comprising at least two layers, characterised in that one of the said layers comprises fibres wound at an angle of between 55° and 90° and in that the other layer comprises fibres wound at an angle with an absolute value of between 10° and 45°.

7. Tube in accordance with claim 6, characterised in that the said tube only comprises two layers and in that the overall proportion of one of the layers, by volume, relative to the overall proportion of the two layers is beween 35% and 65%.

8. Tube in accordance with one of claims 1 to 7, characterised in that it comprises one layer wound at an angle basically equal to 70° relative to the axis of the tube, the overall modulus of elasticity in the natural direction of these fibres being approximately within the range 50,000—56,000 MPa and in that it comprises a layer wound at an angle basically equal to 26° relative to the axis of the tube, the overall modulus of elasticity in the natural direction of this layer aligned at an angle of 26° being approximately 140,000 MPa and in the proportions of the layer wound at an angle of 70° and of the layer wound at an angle of 26° are basically equal to 55°% and 45% respectively by volume.

9. Tube in accordance with one of claims 1 to 7, characterised in that it comprises a layer wound at an angle basically equal to 70° relative to the axis of the tube, the overall modulus of elasticity in the natural direction of these fibres being approximately within the range 50,000—56,000 MPa and in that it comprises a layer wound at an angle basically equal to 30° relative to the axis of the tube, the overall modulus of elasticity in the natural direction of this layer aligned at an angle of 30° being approximately 100,000 MPa and in that the proportions of the layer wound at an angle of 70° and of the layer wound at an angle of 30° are basically equal to 50% and 50% respectively by volume.

10. Tube in accordance with one of claims 1 to 4, characterised in that it comprises at least one layer which includes reinforcing fibres wound at an angle basically equal in absolute value to 38° relative to the axis of the tube and at least one layer which includes reinforcing fibres wound at an angle basically equal in absolute value to 62° relative to the axis of the tube and in that the overall proportions by volume of the layer wound at an angle of 38° and of the layer wound at an angle of 62° relative to these two layers, when considered overall, are basically equal to 45% and 55% respectively.

11. Application of the tube in accordance with one of claims 1 to 10 in order to construct a riser for use on a drilling platform or oil platform or oil production platform.

12. Application of the tube in accordance with one of claims 1 to 10 as tubing for use inside a well located on land or at sea or inside a riser located at sea.

PL_unique